# EUROPÄISCHE PATENTSCHRIFT

(11) **EP 0 765 261 B1**
(45) Veröffentlichungstag und Bekanntmachung des Hinweises auf die Patenterteilung: **30.09.1998**
(21) Anmeldenummer: 95924290.0
(22) Anmeldetag: 20.06.1995
(51) Int. Cl.: B60T 8/50, B60T 8/36

(54) **HYDRAULISCHE BREMSANLAGE MIT SCHLUPFREGELUNG**
CONTROLLED-SLIP HYDRAULIC BRAKE SYSTEM
SYSTEME DE FREINAGE A REGULATION ANTI-PATINAGE

(30) Priorität: 29.06.1994 DE 4422738
(43) Veröffentlichungstag der Anmeldung: 02.04.1997
(73) Patentinhaber: ITT Automotive Europe GmbH, 60488 Frankfurt am Main (DE)
(72) Erfinder: VOLZ, Peter, D-64291 Darmstadt (DE); REINARTZ, Hans-Dieter, D-60439 Frankfurt am Main (DE); BECK, Erhard, D-35781 Weilburg (DE)
(86) Internationale Anmeldenummer: EP9502376
(87) Internationale Veröffentlichungsnummer: WO9600671

(56) Entgegenhaltungen:
- EP-A- 0 317 305
- EP-A- 0 423 755
- WO-A-92/16397
- WO-A-95/09099
- FR-A- 2 680 742
- GB-A- 2 252 140
- GB-A- 2 259 340

## Beschreibung

Die Erfindung betrifft eine hydraulische Bremsanlage mit Schlupfregelung nach dem Oberbegriff des Anspruchs 1.

Die diskontinuierliche Druckmittelsteuerung bei schlupfgeregelten Bremsanlagen mittels digital schaltbaren Einlaß- und Auslaßventilen führt infolge des impulsartigen Druckverlaufs zur unerwünschten Schallemission.

Deshalb wurden bereits verschiedene Maßnahmen zur Senkung des Geräuschpegels während der ABS-/ASR-Regelphase vorgeschlagen, wozu beispielhaft auf die internationale Patentanmeldung PCT/EP90/00266 (WO,A,90/12713)verwiesen wird. Hierin wird vorgeschlagen, Druckpulsationsdämpfer innerhalb den Hauptdruckleitungen, und zwar in Nähe des Bremsdruckgebers, bzw. im Nebenschluß der elektromagnetischen Einlaß- und Auslaßventile anzuordnen. Die verwendeten Druckpulsationsdämpfer sind als schwingungsdämpfende, elastomere Energiespeicherelemente ausgeführt, die durch ihre definierte Volumenerweiterung, Durchströmungslänge und Drosseleigenschaften eine Übertragung der aus den Ventilschaltfrequenzen resultierenden Schallemission auf das massebehafte und folglich schwingungsfähige Bremssystem verhindern sollen.

Ein relativ weiches Pedalgefühl und die Vergrößerung des Pedalweges sind die unerwünschten Folgen der durch die vorgeschriebenen Druckpulsationsdämpfer zusätzlich hervorgerufenen Volumenaufnahme von Druckmittel während des Bremsvorganges.

Aus der EP-A-0317305 ist bereits ein Elektromagnetventil bekannt geworden, das zur Verwendung für blockiergeschützte hydraulische Bremsanlagen geeignet ist. Das Elektromagnetventil ist mit einem eine Spule aufnehmenden Magnetkern versehen, der auf der einen Seite von einem Magnetanker und auf der anderen Seite von einem Membrankörper begrenzt ist, wobei der Membrankörper einen Durchlaß aufweist, der von einer Ventilnadel verschließbar ist. Der Membrankörper ist axial beweglich zwischen dem Magnetkern und einem den Druckmitteleinlaß aufweisenden Gehäusedeckel eingespannt, so daß in der den Zulaufkanal im Membrankörper verschließenden Schaltstellung der Ventilnadel beiderseits des Membrankörpers eine Druckdifferenz wirksam ist, die zu einer Relativverschiebung der Ventilnadel gegenüber dem Magnetanker führt. Hierdurch ist eine zwischen der Ventilnadel und dem Magnetanker angeordnete Druckfeder vorgespannt. Die durch die Druckdifferenz am Membrankörper verursachte Druckfeder-Vorspannkraft führt bei einer Unterbrechung der elektromagnetischen Erregung zu einem raschen Lösen des Magnetankers vom Magnetkern. Dies führt zu kleinen Ventilöffnungszeiten. Eine auf die Ventilnadel im Öffnungssinne wirksame Federrückstellkraft begünstigt die schnelle Freigabe des Zulaufkanals im Membrankörper, so daß Druckmittel nach dem Passieren des freien Durchgangs an der Ventilnadel zu einem Ringspalt gelangt, der zwischen der hohlzylinderförmigen Innenwandung des Magnetkerns und der Außenwandung eines die Ventilnadel führenden Zylinderteils gebildet ist. Das somit vom Ventileinlaß kommende Fluid gelangt über den Zulaufkanal im Membrankörper und dem nachgeordneten Ringspalt in eine zum Druckmittelverbraucher führende Druckmittelverbindung.

In der gattungsbildenden GB-A-2252140 ist eine Ventilbaugruppe für eine Blockiervorrichtung beschrieben, die mit Einlaß- und einem Auslaßventil versehen ist. Im Einlaßventil befindet sich ein in Abhängigkeit von hydraulischen Druckdifferenzen schaltbarer Ringkolben, der als Stufenkolben ausgeführt ist und unter dem hydraulischen Druck des Hauptzylinder stehend druckausgeglichen ist. Eine zwischen dem Ventilträger des elektromagnetisch ansteuerbaren Einlaßventils und dem Ringkolben angeordnete Druckfeder hält den Ringkolben in einer drosselfreien Offenstellung, womit Druckmittel vom Hauptzylinder ungehindert zur Radbremse gelangt. Bei einer elektromagnetischen Erregung des Einlaßventils gelangt dessen Ventilschließglied in Sperrstellung, während das elektromagnetisch erregte Auslaßventil den Radbremsdruck in Richtung eines Vorratsbehälters entläßt. Damit reduziert sich das von einer Abzweigung des Auslaßventils zu einer Kolbenstufe am Ringkolben geführte Raddruckniveau, womit der Ringkolben nicht mehr druckausgeglichen ist und dieser entgegen der Wirkung der Druckfeder mit seinem Dichtsitz den ursprünglich ungehinderten Druckmitteldurchlaß vom Hauptzylinder zur Radbremse im Einlaßventil verschließt. Ein erneuter Druckanstieg in der Radbremse erfolgt durch eine gepulste Ansteuerung der Magnetspulen des Einlaßventils, so daß über die Blendenbohrung im Ringkolben Druckmittel vom Hauptzylinder gedrosselt zur Radbremse gelangt. Hierzu befindet sich das Auslaßventil in einer die Verbindung zum Vorratsbehälter sperrenden Schaltstellung. Bei Deaktivierung des Hauptzylinders befindet sich der Ringkolben wieder in einer die Druckmittelverbindung zur Radbremse ungehindert freigebenden Schaltstellung, da die Druckfeder den Ringkolben am Anschlag positioniert.

Die gewählte Kanalanordnung und Druckmittel führung zur Herstellung einer Verbindung zwischen dem Hauptzylinder, dem Einlaß- und Auslaßventil und der Radbremse zwingt zu einer baulichen Aneinanderreihung der einzelnen Elemente im Einlaßventil, wobei auch durch die gewählte Schaltfunktion des Ringkolbens in Abhängigkeit des von der Radbremse über das Auslaßventil zugeführten Druckniveaus die gewählte Anordnung erforderlich ist.

Daher ist es die Aufgabe der Erfindung, unter Beibehaltung eines möglichst unveränderten einfachen Grundaufbaus der bisher gebräuchlichen Bremsanlagen einen konstruktiven Lösungsweg für die Anordnung einer schaltbaren Blende aufzuzeigen, der den von den Ventilschaltstellungen abhängige Geräuschpegel und dessen Fortpflanzung wirkungsvoll mindert.

Diese Aufgabe wird erfindungsgemäß durch die den Patentanspruch 1 kennzeichnenden Merkmale gelöst.

Weitere Merkmale, Vorteile und Anwendungsmöglichkeiten der Erfindung gehen aus der nachfolgenden Beschreibung zweier Ausführungsbeispiele hervor.

Es zeigen:
- Figur 1: einen hydraulischen Schaltplan für die erfindungsgemäße Bremsanlage,
- Figur 2: die Anordnung einer schaltbaren Blende innerhalb eines Druckmodulationsventils.

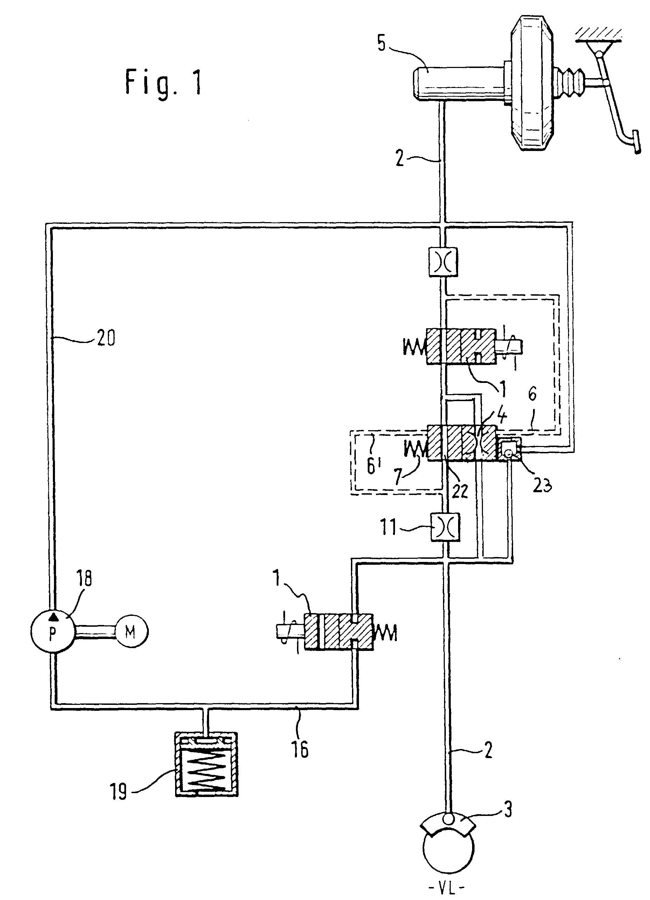

Die Figur 1 zeigt schematisch skizziert den hydraulischen Schaltplan für die erfindungsgemäße Bremsanlage. Der Bremsdruckgeber 5 steht über die Hauptdruckleitung 2 mit der Radbremse 3 in Verbindung. Ein in der Grundstellung elektromagnetisch auf Durchlaß geschaltetes und als Einlaßventil wirksames Druckmodulationsventil 1 sowie ein zum Druckmodulationsventil 1 stromabwärts angeordnete und in der Grundstellung wirkungslose Blende 4 sind Bestandteil der Hauptdruckleitung 2. Die Blende 4 ist symbolisch als 2/2-Wegeventil dargestellt, an dem ein erster Steuerdruckanschluß 6 vom Druck des Bremsdruckgebers 5 und ein am 2/2-Wegeventil entgegengesetzt wirkender zweiter Steuerdruckanschluß 6' vom Druck in der Radbremse 3 beaufschlagt ist. Damit befindet sich der Anschluß des zweiten Steuerdruckanschlusses 6' stromabwärts, das heißt bildlich gesehen unterhalb der Blende 4. Zweckmäßigerweise befindet sich stromabwärts, das heißt unterhalb des Steuerdruckanschlusses 6', eine Festblende 11, die verhindert, daß beim schnellen Antreten der Bremse in der schlupffreien Normalbremsphase eine allzu große Druckdifferenz vor und hinter der Blende 4 nicht wirksam werden kann, wodurch unerwünschte Drosseleffekte ausbleiben. Im Bedarfsfalle kann auch stromaufwärts, das heißt vor dem Einlaßventil, eine Festblende in der Hauptdruckleitung 2 eingesetzt sein, die gleichfalls wie die vorbeschriebene Festblende 11 fahrzeugspezifisch kalibriert ist und generell in ihrem Querschnitt etwas größer bemessen sein kann als die Festblende 11. Damit ist unter allen denkbaren Betriebszuständen ein vorzeitiges unerwünschtes Umschalten und damit Wirksamwerden der Blende 4 verhindert. Eine symbolisch am 2/2-Wegeventil dargestellte Druckfeder 7 sorgt für die Einhaltung eines zunächst ungedrosselten Druckmitteldurchlasses in der Bremslösestellung und Normalstellung zur Radbremse 3. An der Radbremse 3 ist ferner eine Rücklaufleitung 16 angeschlossen, die über ein in der Grundstellung in Sperrstellung befindliches und als Auslaßventil wirksames elektromagnetisch betätigbares Druckmodulationsventil 1 an der Saugseite einer Hilfsdruckpumpe 18 angeschlossen ist. Zur Geräuschreduzierung des elektromagnetisch betätigbaren Auslaßventils kann gleichfalls wie für das Einlaßventil ausführlich beschrieben worden ist, eine schaltbare Blende 4 mit entsprechenden vom Druck vor und hinter dem Auslaßventil beaufschlagten Steuerdruckleitungen angeordnet werden. Da jedoch im Druckregelfalle mit weitaus geringeren Druckschwankungen vor und hinter dem Auslaßventil zu rechnen ist, ist die in Bezug auf das Einlaßventil vorgeschlagene Geräuschdämpfungsmaßnahme zwecks Anordnung einer auslaßseitig der Radbremse 3 nachgeschalteter Blende nicht zwingend erforderlich.

Zur Zwischenspeicherung von überschüssigem Druckmittelvolumen weist überdies die Rücklaufleitung 16 einen Niederdruckspeicher 19 auf. Die Druckseite der Hilfsdruckpumpe 18 steht über eine Hilfsdruckleitung 20 mit dem Bremsdruckgeber 5 bzw. wiederum mit der Hauptdruckleitung 2 in Verbindung. Durch die erfindungsgemäße Ventilschaltstellung ist es möglich, eine Minderung der im Druckmodulationsventil 1 (Einlaßventil) ansonsten verursachten Ventilschaltgeräusche zu erzielen, sobald während des Schaltvorganges des Einlaßventils sowie abhängig von einem konstruktiv festgelegten Umschaltpunkt die Blende 4 in der Hauptdruckleitung 2 wirksam wird. Es ist vorgesehen, anhand definierter Auslegungskriterien der Bremsanlage, beispielsweise mit einer zunehmenden Druckdifferenz am Druckmodulationsventil 1 von mehr als 15 bar die Blendenfunktion wirksam werden zu lassen.

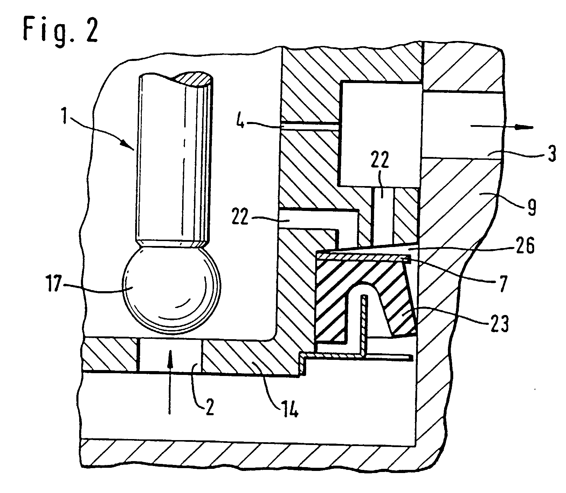

Basierend auf dem prinzipiellen hydraulischen Schaltungsaufbau der erfindungsgemäßen Bremsanlage wird nachfolgend anhand der Figur 2 eine geeignete Ventilkonstruktionen vorgestellt.

Die Figur 2 zeigt in einem Teilschnitt durch ein Druckmodulationsventil 1 (Einlaßventil) eine besonders kompakt ausgeführte Konstruktion der aus Figur 1 bekannten Schaltungsanordnung, wobei bei in Grundstellung auf ungehinderten Durchlaß geschalteten Ventilschließglied 17 des Druckmodulationsventils 1 Druckmittel von der Hauptdruckleitung 2 sowohl über die Blende 4 im Ventilträger 14 wie auch durch einen verschließbaren Kanal 22 in Richtung der Radbremse 3 gelangen kann. Die Besonderheit der Erfindung ist darin zu sehen, daß der Kanal 22 in verschiedenen Ebenen des Ventilträgers 14 angeordnet ist, so daß vorzugsweise der erste Abschnitt des Kanals 22 eine Verbindung über das offene Ventilschließglied 17 zu einem eine Ringmanschette 23 aufweisenden Hohlraum 26 herstellt und der zweite Abschnitt des Kanals 22 diesen Hohlraum 26 mit dem zur Radbremse 3 führenden Hauptdruckleitung 2 zu verbinden vermag. Die beiden Abschnitte des Kanals 22 sind beispielsweise um etwa 90 Grad zueinander versetzt, so daß bei nur geringer Druckdifferenz oberhalb und unterhalb der Ringmanschette 23 eine als Tellerfeder wirksame Druckfeder 7 zunächst den die beiden Abschnitte des Kanals 22 verbindenden Hohlraum 26 offenhält, bis der hydraulische Druck unterhalb der Ringmanschette 23, der entweder dem Druck in der Hauptdruckleitung 2 oder dem Druck in der Pumpendruckleitung 12 entspricht, entgegen der Druckfeder 7 die beiden Abschnitte der Kanäle 22 verschließt, so daß ausschließlich eine Druckmittelverbindung vom Druckmodulationsventil 1 (Einlaßventil) zur Radbremse 3 über die Blende 4 erfolgt.

## Patentansprüche

1. Hydraulische Bremsanlage mit Schlupfregelung, mit einem Bremsdruckgeber (5), der über eine Hauptdruckleitung (2) mit wenigstens einer Radbremse (3) hydraulisch in Verbindung steht, mit einer an der Radbremse (3) angeschlossenen Rücklaufleitung (16), die mit einem Druckmittelsammler (19) und mit einer Hilfsdruckpumpe (18) in Verbindung steht, die eine Hilfsdruckleitung (20)
aufweist, die mit dem Bremsdruckgeber (5) verbunden ist, sowie mit mindestens einem in der Hauptdruckleitung (2) und in der Rücklaufleitung (15) wirksamen Druckmodulationsventil (1), das den Druckmitteldurchlaß in der Hauptdruckleitung (2) und in der Rücklaufleitung (16) entweder sperrt oder geöffnet hält, wobei zwischen dem Druckmodulationsventil (1) und der Radbremse (3) in die Hauptdruckleitung (2) eine Blende (4) in Abhängigkeit von einer Druckdifferenz wirksam ist, wobei in einer ersten Schaltstellung des Druckmodulationsventils (1) ein ungehinderter hydraulischer Durchlaß zwischen dem Bremsdruckgeber (5) und der Radbremse (3) hergestellt ist und in einer weiteren Schaltstellung des Druckmodulationsventils (1) die Blende (4) den Druckmitteldurchlaß in der zur Radbremse (3) führenden Hauptdruckleitung (2) begrenzt, dadurch **gekennzeichnet**, daß die Blende (4) in einem Ventilträger (14) angeordnet ist, wobei der Ventilträger (14) eine Ringmanschette (23) und einen von der Ringmanschette (23) in Abhängigkeit einer Druckdifferenz zwischen Bremsdruckgeber (5) und Radbremse (3) verschließbaren Kanal (22) aufweist, der über das offene Druckmodulationsventil (1) die Hauptdruckleitung (2) mit der Radbremse (3) normalerweise derart verbindet, daß sowohl über die Blende (4) wie auch über den verschließbaren Kanal (22) Druckmittel vom Bremsdruckgeber (5) in Richtung der Radbremse (4) gelangt.

2. Hydraulische Bremsanlage nach Anspruch 1, dadurch **gekennzeichnet**, daß zwischen der Ringmanschette (23) und dem Kanal (22) eine als Druckfeder (7) wirksame Tellerfeder angeordnet ist, die am Ventilträger (14) des Druckmodulationsventils (1) angeordnet ist.

3. Hydraulische Bremsanlage nach Anspruch 1, dadurch **gekennzeichnet**, daß der Ventilträger (14) einen Ventilsitzkörper des Druckmodulationsventils (1) aufnimmt.

## Claims

1. Hydraulic brake system with slip control, including a braking pressure generator (5) which is connected hydraulically to at least one wheel brake (3) by way of a main pressure line (2), a return line (16) connected to the wheel brake (3) and in communication with a pressure fluid collecting means (19) and an auxiliary-pressure pump (18) having an auxiliary-pressure line (20) between the braking pressure generator (5) and the wheel brake (3) which is connected to the braking pressure generator (5), and at least one pressure modulation valve (1) acting in the main pressure line (2) and in the return line (16) to close or keep open the pressure fluid passage in the main pressure line (2) and the return line (16), wherein an orifice (4) in the main pressure line (2) between the pressure modulation valve (1) and the wheel brake (3) is operative in response to a difference in pressure, and an unimpeded hydraulic passage between the braking pressure generator (5) and the wheel brake (3) is provided in a first switch position of the pressure modulation valve (1), and the orifice (4) limits the pressure fluid passage in the main pressure line (2) leading to the wheel brake (3) in another switch position of the pressure modulation valve (1),
**characterized** in that the orifice (4) is arranged in a valve carrier (14), and the valve carrier (14) includes an annular sleeve (23) and a channel (22) closable by the annular sleeve (23) in response to a difference in pressure between the braking pressure generator (5) and the wheel brake (3), the channel normally connecting the main pressure line (2) to the wheel brake (3) by way of the open pressure modulation valve (1) in such a manner that pressure fluid is conducted from the braking pressure generator (5) in the direction of the wheel brake (4) by way of the orifice (4) and the closable channel (22).

2. Hydraulic brake system as claimed in claim 1,
**characterized** in that interposed between the annular sleeve (23) and the channel (22) is a cup spring which acts as a compression spring (7) and is mounted on the valve carrier (14) of the pressure modulation valve (1).

3. Hydraulic brake system as claimed in claim 1,
**characterized** in that the valve carrier (14) accommodates a valve seat member of the pressure modulation valve (1).

## Revendications

1. Système de freinage hydraulique à régulation anti-patinage, comprenant un générateur de pression de freinage (5) qui est hydrauliquement relié à au moins un frein de roue (3) par l'intermédiaire d'une conduite de pression principale (2), et comprenant une conduite de retour (16) reliée au frein de roue (3) et communiquant avec un accumulateur (19) de fluide sous pression et avec une pompe auxiliaire (18), et comprenant une conduite de pression auxiliaire (20) reliée au générateur de pression de freinage (5) et à au moins une soupape (1) de modulation de la pression, agissant sur la conduite de pression principale (2) et sur la conduite de retour (16), la soupape coupant ou ouvrant le passage du fluide sous pression à travers la conduite principale (2) et la conduite de retour (16), un obturateur (4) étant actif entre la soupape (1) de modulation de la pression et le frein de roue (3), à l'intérieur de la conduite de pression principale (2), en fonction d'une pression différentielle, une première position de commutation de la soupape (1) de modulation de la pression établissant un passage hydraulique non entravé entre le régulateur de pression de freinage (5) et le frein de roue (3), et une autre position de commutation de la soupape (1) de modulation de la pression amenant l'obturateur (4) à limiter le passage de fluide sous pression dans la conduite de pression principale (2) rejoignant le frein de roue (3),
caractérisé en ce que l'obturateur (4) est disposé dans un support de soupape (14), le support de soupape (14) comprenant un manchon de joint annulaire (23) et un canal (22) pouvant être obturé par le manchon de joint annulaire (23) en fonction d'une pression différentielle régnant entre le générateur de pression de freinage (5) et le frein de roue (3), ce canal reliant normalement la conduite de pression principale (2) au frein de roue (3) via la soupape (1) de modulation de la pression ouverte, d'une manière telle que du fluide sous pression puisse s'écouler du générateur de pression de freinage (5) en direction du frein de roue (3) en passant à la fois à travers l'obturateur (4) et à travers le canal (22) pouvant être obturé.

2. Système de freinage hydraulique selon la revendication 1,
caractérisé en ce qu'un ressort de type Belleville agissant comme un ressort de pression (7) est disposé entre le manchon de joint annulaire (23) et le canal (22), ce ressort étant disposé sur le support de soupape (14) de la soupape (1) de modulation de la pression.

3. Système de freinage hydraulique selon la revendication 1,
caractérisé en ce que le support de soupape (14) reçoit un corps de siège de soupape de la soupape (1) de modulation de la pression.
